# EUROPEAN PATENT SPECIFICATION

(11) **EP 2 093 853 B1**
(45) Date of publication and mention of the grant of the patent: **06.11.2013**
(21) Application number: 08151785.6
(22) Date of filing: 22.02.2008
(51) Int. Cl.: H02H 9/02, B60M 3/02

(54) **A method and an apparatus for reducing inrush currents for railways**
Verfahren und Vorrichtung zur Reduzierung des Einschaltstroms für Schienenstrecken
Procédé et appareil pour réduire les courants d'appel dans les chemins de fer

(43) Date of publication of application: 26.08.2009
(73) Proprietor: Balfour Beatty PLC, London SW1V 1LQ (GB)
(72) Inventor: Urbanek, Ulf, 724 82, Västerås (SE); Henning, Lars, 722 16, Västerås (SE)
(74) Representative: Wihlsson, Joakim Per Magnus

(56) References cited:
- JOHN H BRUNKE ET AL: "Elimination of Transformer Inrush Currents by Controlled Switching-Part I: Theoretical Considerations" IEEE TRANSACTIONS ON POWER DELIVERY, IEEE SERVICE CENTER, NEW YORK, NY, US, vol. 16, no. 2, 1 April 2001 (2001-04-01), XP011050028 ISSN: 0885-8977
- EBERLING W ET AL: "OBERLEITUNGSNETZKONZEPTE UND AUTOTRANSFORMERSYSTEM BEI DER DEUTSCHEN BAHN//CATENARY NETWORK CONCEPTS AND AUTOTRANSFORMER SYSTEM AT GERMAN RAILWAY//CONCEPTIONS DE RESEAUX DE CATENAIRE ET SYSTEME A AUTOTRANFORMATEURS AU CHEMIN DE FER ALLEMANDE" ELEKTRISCHE BAHNEN, OLDENBOURG INDUSTRIEVERLAG, MUNCHEN, DE, vol. 100, no. 7, 1 July 2002 (2002-07-01), pages 259-266, XP001125221 ISSN: 0013-5437

## Description

### FIELD OF THE INVENTION

The present invention relates to a method and an apparatus for reducing inrush currents in connection with energizing of transformers in a railway system electrified with an alternating voltage. The railway system including a feeder for supplying trains with alternating voltage, a plurality of transformers, and a breaker configured to connect and disconnect the voltage supply to the trains and the transformers.

### PRIOR ART

For energizing a railway system, a breaker is arranged between a busbar and a contact wire. The busbar and the contact wire functions as a feeder for supplying the trains with alternating current.

It is well known to use autotransformers in railway systems to increase the power transmission capability and to return currents in the ground to the contact wire system. Autotransformers are placed with regular intervals along the track and contact wire system. There may also exist other types of transformers in the railway system. A problem in connection with energization of the railway system is high inrush currents due to magnetic remanence in the transformers. A high inrush current may cause trips of protection relays

Transformer inrush currents are high magnitude currents generated when transformer cores are driven into saturation during energization. These currents have undesirable effect, including potential damage or loss of lifetime to the transformers, protective relay misoperation, and reduced power quality to the railway systems. In an article "Elimination of transformer inrush currents by controlled switching" Part I-Theoretical considerations by John H. Brunke and Klaus J. Fröhlich, published April 2001 in Power Delivery IEEE Transactions on, volume 16 issue 2, ISSN: 0885-8977, it is proposed to calculate the residual flux, which is also called the magnetic remanence, by integration of the winding voltage of the transformer. When a transformer is energized, the instantaneous magnitude of the core flux in the transformer at the instant of energization is the residual flux. The amount of offset of the sinusoidal flux generated by the applied voltage is dependent upon the point in time of the voltage wave where the transformer is energized. In order to prevent core saturation, the instant of energization of the transformer must be controlled.

This document proposes that the "induced flux (the integral of the applied voltage) at the instant of energization must be equal to the residual flux. There is no induced flux before energization, but the source voltage has the prospect to create an induced flux. If the source voltage is considered as a virtual flux source, then the optimal instant to energize a transformer is when the "prospective" flux is equal to the residual flux. This provides the basic strategy for controlling closing on single-phase transformers as proposed in this document. However, a problem with the proposed method is that in practice it is difficult to energize the transformer at exactly the point in time when the "prospective" flux is equal to the residual flux. There is a risk that the point in time of the energization occurs before the point in time when the "prospective" flux is equal to the residual flux. In those cases, the remanence in the transformer will increase at the beginning of the energization, which leads to an increased risk for saturation of the transformer and accordingly for trip of the protective relays.

### OBJECTS AND SUMMARY OF THE INVENTION

The object of the present invention is to provide an improved solution to the above-mentioned problem with remanence in transformers in a railway system upon energization of the railway system.

According to one aspect of the invention this object is achieved with a method as defined in claim 1.

According to another aspect of the invention this object is achieved with an apparatus as defined in claim 7.

According to the invention, the method comprises: measuring the alternating voltage supplied to the breaker, measuring the alternating voltage supplied to the trains and the transformers from the breaker, detecting when the breaker disconnects the voltage supply to the trains and the transformers, calculating the magnetic remanence in the transformers based on the measured voltage supplied from the breaker, and determining whether the calculated magnetic remanence is positive or negative. Upon energizing of the railway system the method comprises: connecting the voltage supply at a point in time on or close to a positive peak of the voltage supplied to the breaker if the magnetic remanence is negative, and connecting the voltage supply at a point in time on or close to a negative peak of the voltage supplied to the breaker if the magnetic remanence is positive.

As the contribution to remanence is zero at a peak in the supplied voltage, it is advantageous to connect the voltage supply at a peak in the supplied voltage. According to the invention, the railway system is energized at or close to a positive peak of the supplied voltage if the remanence is negative, and at or close to a negative peak of the supplied voltage if the remanence is positive. Thereby, a symmetric magnetization is achieved and accordingly saturation of the transformers is avoided, which otherwise will cause a high inrush current. The symmetric magnetization makes the remanence in the transformer to rapidly dissipate. Thus, the risk for the transformers to go into saturation has been significantly reduced and accordingly a high inrush current is avoided.

According to an embodiment of the invention, the magnetic remanence in the transformers is calculated as the total area of the voltage supplied from the breaker, counted from the last peak voltage before the point in time when the power supply was disconnected until the supplied voltage becomes zero or close to zero. The magnetic remanence is determined to be positive if the calculated voltage area is positive and the magnetic remanence is determined to be negative if the calculated voltage area is negative. The voltage is preferably calculated by integration of the supplied from the breaker.

According to an embodiment of the invention, the voltage supply to the supply conductor is connected at a point in time close to and ahead of the peak of the voltage supplied to the breaker. Preferably, the point in time ahead the peak of the voltage supplied is within an interval of 1-4ms. By connecting the voltage at a point in time ahead of the peak voltage, the margin against saturation in a later half period of the supplied voltage has been further reduced.

According to an embodiment of the invention, said point in time ahead the peak of the voltage is determined based on the size of the calculated magnetic remanence, such that the larger magnetic remanence the longer is the time ahead the peak of the voltage. This embodiment further reduces the inrush current at energizing the railway system.

### BRIEF DESCRIPTION OF THE DRAWINGS

The invention will now be explained more closely by the description of different embodiments of the invention and with reference to the appended drawings.

Figure 1 shows an apparatus for reducing inrush currents in connection with energizing of transformers in a railway system according to an embodiment of the invention.

Figure 2 shows an example of the voltage supplied from the breaker before and after the voltage supply has been disconnected.

Figure 3 shows another example of the voltage supplied from the breaker before and after the voltage supply has been disconnected.

Figure 4 shows an example of the voltage supplied to the breaker and generated inrush current when the voltage supply is connected at a peak of the voltage.

Figure 5 shows an example of the voltage supplied to the breaker and generated inrush current when the voltage supply is connected 2-3ms before the peak of the voltage.

### DETAILED DESCRIPTION OF PREFERRED EMBODIMENTS OF THE INVENTION

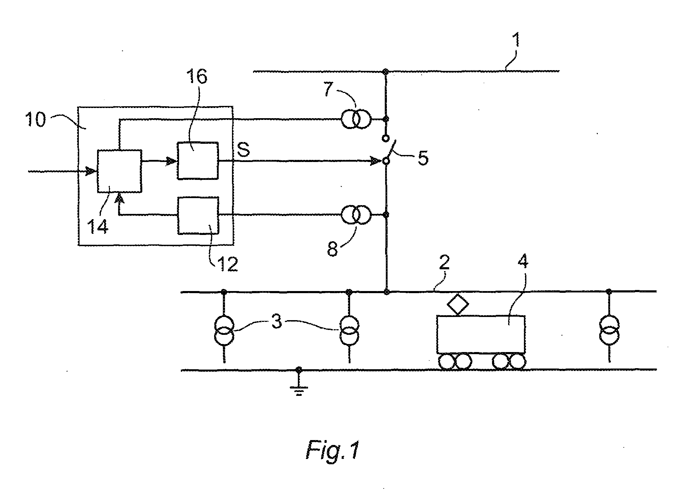

Figure 1 shows an example of a railway system and an apparatus for reducing inrush currents in the railway system according to an embodiment of the invention. The railway system includes a busbar 1 of a power supply substation, and a supply connector 2, which supplies a traction line including trains 4 with power. The busbar 1 and the supply conductor 2 are connected via a breaker 5. A plurality of transformers 3, such as autotransformers, can be placed along the supply connector. The breaker 5 is configured to connect and disconnect the voltage supply to the supply connector 2, and accordingly the voltage supply to the trains 4 and transformers 3.

The apparatus for reducing the inrush currents includes a first measuring device 7 for measuring the alternating voltage supply to the breaker 5 and a second measuring device 8 for measuring the alternating voltage supplied from the breaker 5 to the supply conductor. For example, the measuring devices 7 and 8 include a voltage transformer. The apparatus further comprises a control unit 10 configured to control opening and closing of the breaker 5 and accordingly to control the energization of transformers and the trains. The control unit 10 is configured to generate a connection signal S to the breaker 5, which closes the breaker 5. Upon receiving the connection signal S, the breaker connects the voltage supply from the busbar 1 to the supply conductor 2, and thereby the voltage supply to the trains and the transformers.

The control unit 10 includes suitable hardware and software for carrying out the invention, such as processing means, for example a CPU, memory means, and communication means. The control unit 10 is configured to generate the connection signal S upon receiving a connection order from a main control system (not shown in the figure). Upon receiving the connection order from the main control system, the control unit 10 determines a suitable point in time relative to the alternating voltage on the busbar for closing the breaker 5. The control unit 10 is configured to receive measurements from the first and the second measuring devices 7, 8. The control unit 10 includes detecting means 12 for detecting when the breaker disconnects the voltage supply to the supply conductor 2, i.e. disconnects the voltage supply to the trains and the transformers. The detecting means 12 is configured to supervise the voltage received from the second measuring device 8, which measures the voltage supply to the supply conductor from the breaker, and to detect when the voltage supply has been stopped.

The first and the second measuring devices are configured to continuously measure the voltage supply to and from the breaker 5. The measured voltage from the second measuring device 8 is continuously stored on a memory of the control unit 10. The measured voltage is stored as a window. Upon detecting that the voltage supply to a supply conductor has been disconnected, the magnetic remanence in the transformer is calculated based on the stored voltage measurements from the second measuring device 8 made before and after the opening of the breaker 5, i.e. based on the voltage supplied to the supply conductor 2 before and after the voltage was disconnected. The control unit 10 includes calculating means 14 for calculating the magnetic remanence in the transformers and to determine whether the calculated magnetic remanence is positive or negative. The calculating means 14 is configured to calculate the magnetic remanence in the transformers as the total area of the voltage supplied from the breaker to the supply conductor, counted from the last peak voltage before the point in time when the power supply was disconnected until the supply voltage becomes zero or close to zero. The remanence is calculated by integrating the voltage supplied to the supply conductor from the last peak voltage before the point in time when the power supply was disconnected until the supply voltage becomes zero or close to zero.

The control unit 10 further includes signal generating means 16 configured to generate the connecting signal S to the breaker 5. According to the invention, the signal generating means 16 is configured to generate the connecting signal S, and accordingly to connect the breaker 5, at a point in time on or close to a positive peak of the voltage supply to the breaker 5 if the magnetic remanence is negative, and to connect the breaker 5 at a point in time on or close to a negative peak of the voltage supplied to the breaker if the magnetic remanence is positive. According to an embodiment of the invention, the connecting means 16 is configured to connect the breaker at a point in time ahead of the peak of the voltage supplied to the breaker, and to determine the point in time ahead the peak of the voltage based on the size of the calculated magnetic remanence, such that the larger magnetic remanence the longer is the time ahead the peak of the voltage supplied to the breaker at which the breaker is connected.

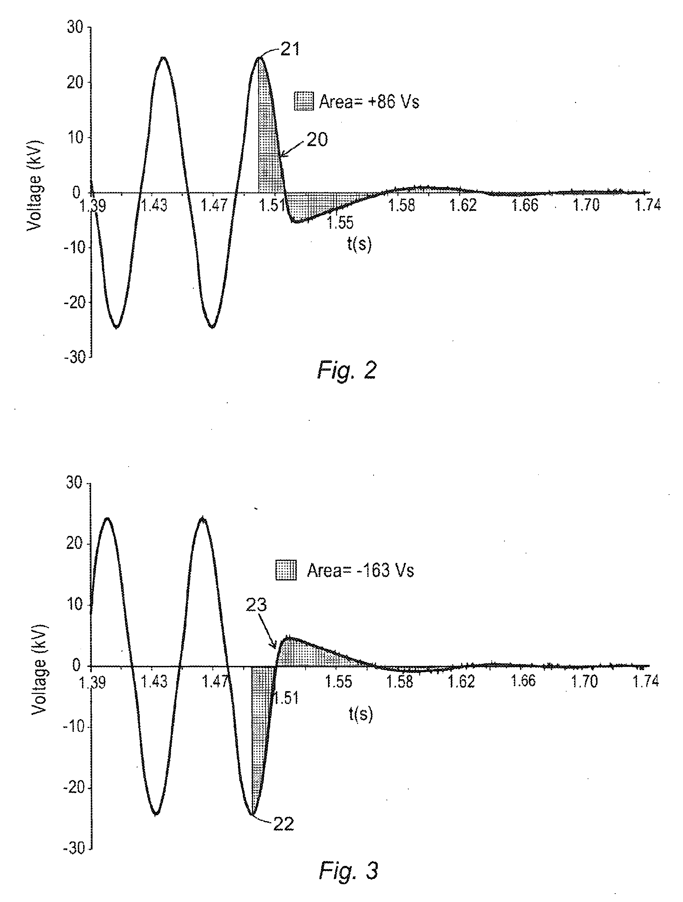

Figure 2 shows an example of the alternating voltage supplied to the supply connector from the breaker 5 and measured by the second measuring device 8 before an after a point in time when the breaker 5 was disconnected. As seen from the figure, the breaker is opened, and accordingly the power supply to the transformers is disconnected, at a point in time indicated by 20. The supplied voltage rapidly decreases and approaches zero, as shown in the figure. The voltage area is calculated from the point in time from the last peak voltage before the point in time when the power supply was disconnected, indicated by 21, until the supply voltage becomes zero or almost zero. This voltage area has been marked in the figure. In this case, the total voltage area is equal to +86 Vs, and accordingly the remanence is proportional to this calculated voltage area. This means that the remanence is positive. According to the invention, the voltage supply should be connected at a negative peak of the voltage supplied to the breaker or close to the negative peak if the remanence is positive.

Figure 3 shows another example of the alternating voltage supplied to the supply connector from the breaker 5 and measured by the second measuring device 8 before and after a point in time when the breaker 5 was disconnected. In this case the breaker is open at a point in time indicated by 23. The total area of the voltage supplied from the breaker is calculated from the last peak voltage before the point in time 23 when the breaker is open, in this case a negative peak indicated by 22, until the supply voltage becomes zero or close to zero. The calculated area is marked in the figure. In this case the total voltage area is equal to -163 Vs, and accordingly the remanence is proportional to this calculated voltage area. This means that the remanence is negative. According to the invention, the voltage supply should be connected again at a pointing time on or close to a positive peak of the voltage supply to the breaker if the remanence is negative.

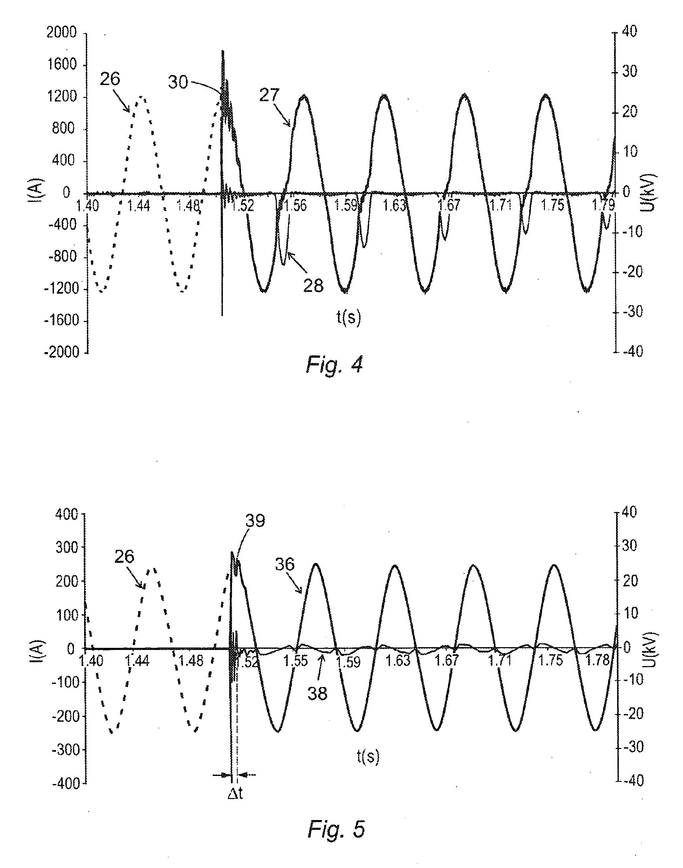

Figure 4 shows an example of the voltage supplied to the breaker and generated inrush current when the voltage supply is connected at a peak of the voltage. The voltage supplied to the breaker is indicated by 26, the voltage supplied to the supply conductor after the breaker 5 has been closed is indicated by 27, and the current through the supply conductor, i.e. the inrush current, is indicated by 28. In this case, the calculated remanence is negative, and accordingly the breaker is closed at a positive peak, indicated by 30, of the voltage 26 supplied to the breaker. Saturation of the transformers in the first half period is avoided by the combination of a negative remanence and connecting the voltage at a positive peak value of the supplied voltage. However, a peak in the current 28 occurs in the second half period. In order to reduce this current peak it is advantageous to close the breaker a few ms before the peak value of the voltage, preferably 1-4 ms before the peak value.

It has been empirically proven that the inrush current can be further reduced if the breaker is closed at a point in time before the peak value that depends on the absolute value of remanence, i.e. the calculated total voltage area from the last voltage peak before the voltage supply was disconnected until the supplied voltage is zero. The larger remanence, the longer shall the time be before the peak of the voltage at which the breaker is opened. According to an embodiment of the invention, the absolute value of the remanence is calculated, as described above, and the time before the voltage peak at which the voltage supply shall be connected is determined based on the calculated remanence. In practice this can be done in several ways. According to one alternative, the time before the peak is calculated based on a formula, which describes the time before the peak value as a function of the remanence. In another alternative, a lookup table is prepared beforehand, for example based on empirical knowledge or calculations, and stored in a memory in the control unit. The lookup table includes pre-determined values of the time before a voltage peak the breaker shall open in dependence on the calculated remanence.

Figure 5 shows an example of the voltage supplied to the breaker and generated inrush current when the voltage supply is connected 2-3ms before the peak of the voltage. The voltage supplied to the breaker is indicated by 26, the voltage supplied to the supply conductor after the breaker 5 has been closed is indicated by 36, and the current through the supply conductor, i.e. the inrush current, is indicated by 38 In this example, the calculated remanence is -72 Vs. Thus, the calculated remanence is negative, and accordingly the breaker shall be closed close to a positive peak of the supplied voltage. As seen from the figure, the breaker is closed at a point in time, indicated by 39, before a positive voltage peak of the voltage supply to the breaker in order to get an extra compensation against the negative remanence. In this example, the time before the peak Δt is in the order of 2-3 ms. The length of the time before the peak at which the breaker is closed is determined in dependence on the value of the remanence.

The detecting means 12, the calculating means 14, and the connecting means 16 is preferably implemented by software on any type of suitable hardware.

## Claims

1. A method for reducing inrush currents in connection with energizing of transformers in a railway system electrified with an alternating voltage, the railway system including a feeder (1) for supplying trains with alternating voltage, a plurality of transformers (3), and a breaker (5) configured to connect and disconnect the voltage supply to the trains and the transformers, wherein the method comprises:
measuring the alternating voltage supplied to the breaker,
measuring the alternating voltage supplied from the breaker,
detecting when the breaker disconnects the voltage supply to the trains and the transformers,
calculating the magnetic remanence in the transformers based on the measured voltage supplied from the breaker, determining whether the calculated magnetic remanence is positive or negative, and upon energizing the railway system:
connecting the voltage supply at a point in time on or close to a positive peak of the voltage supplied to the breaker if the magnetic remanence is negative, and
connecting the voltage supply at a point in time on or close to a negative peak of the voltage supplied to the breaker if the magnetic remanence is positive.

2. The method according to claim 1, wherein the magnetic remanence in the transformers is calculated as the total area of the voltage supplied from the breaker, counted from the last peak voltage before the point in time when the power supply was disconnected until the supplied voltage becomes zero or close to zero.

3. The method according to claim 2, wherein the magnetic remanence is determined to be positive if the calculated voltage area is positive and the magnetic remanence is determined to be negative if the calculated voltage area is negative.

4. The method according to any of the previous claims, wherein the voltage supply to the trains and the transformers is connected at a point in time close to and ahead of the peak of the voltage supplied to the breaker.

5. The method according to claim 4, wherein the point in time when the voltage supply to the trains and the transformers is connected is within an interval of 1-4ms ahead of the peak of the voltage supplied to the breaker.

6. The method according to claim 4, wherein said point in time ahead the peak of the voltage is determined based on the size of the calculated magnetic remanence, such that the larger remanence the longer is the time ahead the peak of the voltage.

7. An apparatus for reducing inrush currents in connection with energizing of transformers in a railway system electrified with an alternating voltage, the railway system including a feeder (1) for supplying trains with alternating voltage, a plurality of transformers (3), and a breaker (5) configured to connect and disconnect the voltage supply to the trains and the transformers, **characterized in that** the apparatus comprises:
a first measuring device (7) for measuring the alternating voltage supplied to the breaker,
a second measuring device (8) for measuring the alternating voltage supplied from the breaker,
means (12) for detecting when the breaker disconnects the voltage supply to the trains and the transformers,
calculating means (14) for calculating the magnetic remanence in the transformers upon detecting that the voltage supply has been disconnected based on the measured voltage supplied from the breaker and to determine whether the calculated magnetic remanence is positive or negative, and
connecting means (16) for connecting the breaker upon energizing the railway system, wherein the connecting means is configured to connect the breaker at a point in time on or close to a positive peak of the voltage supplied to the breaker if the magnetic remanence is negative, and to connect the breaker at a point in time on or close to a negative peak of the voltage supplied to the breaker if the magnetic remanence is positive.

8. The apparatus according to claim 7, wherein said calculating means (14) is configured to calculate the magnetic remanence in the transformers as the total area of the voltage supplied from the breaker, counted from the last peak voltage before the point in time when the power supply was disconnected until the supplied voltage becomes zero or close to zero.

9. The apparatus according to claim 8, wherein the magnetic remanence is determined to be positive if the calculated voltage area is positive and the magnetic remanence is determined to be negative if the calculated voltage area is negative.

10. The apparatus according to any of claims 7 - 9, wherein said connecting means (16) is configured to connect the breaker at a point in time ahead of the peak of the voltage supplied to the breaker, and to determine the point in time ahead the peak of the voltage based on the size of the calculated magnetic remanence, such that the larger magnetic remanence the longer is the time ahead the peak of the voltage.

## Patentansprüche

1. Verfahren zur Verminderung von Einschaltströmen bei dem Beaufschlagen von Transformatoren in einem mit einer Wechselspannung beaufschlagten Schienensystem, wobei das Schienensystem eine Zuleitung (1) für die Versorgung von Zügen mit Wechselspannung, mehrere Transformatoren (3) und einen Trennschalter (5), der dazu ausgelegt ist, die Spannungsversorgung zu den Zügen und den Transformatoren zu verbinden und zu trennen, umfasst, wobei die Methode umfasst:
Messen der zu dem Trennschalter geführten Wechselspannung,
Messen der von dem Trennschalter gelieferten Wechselspannung,
Erfassen, wann der Trennschalter die Spannungsversorgung zu den Zügen und den Transformatoren trennt,
Berechnen der magnetischen Remanenz in den Transformatoren, basierend auf der von dem Trennschalter gelieferten, gemessenen Spannung, Ermitteln, ob die berechnete magnetische Remanenz positiv oder negativ ist, und, nach dem Beaufschlagen des Schienensystems:
Verbinden der Spannungsversorgung zu einem Zeitpunkt bei oder nahe eines positiven Scheitelwertes der zu dem Trennschalter geführten Spannung, falls die magnetische Remanenz negativ ist, und
Verbinden der Spannungsversorgung zu einem Zeitpunkt bei oder nahe eines negativen Scheitelwertes der zu dem Trennschalter geführten Spannung, falls die magnetische Remanenz positiv ist.

2. Das Verfahren nach Anspruch 1, wobei die magnetische Remanenz in den Transformatoren als Gesamtfläche unter der Spannungskurve der von dem Trennschalter gelieferten Spannung berechnet wird, gezählt ab dem letzten Spannungs-Scheitelwertes vor dem Zeitpunkt, zu dem die Spannungsquelle getrennt wurde, bis die gelieferte Spannung Null oder nahe Null wird.

3. Das Verfahren nach Anspruch 2, wobei die magnetische Remanenz als positiv bestimmt wird, falls die berechnete Fläche unter der Spannungskurve positiv ist und die magnetische Remanenz als negativ bestimmt wird, falls die berechnete Fläche unter der Spannungskurve negativ ist.

4. Das Verfahren nach einem der vorherigen Ansprüche, wobei die Spannungsversorgung zu den Zügen und den Transformatoren zu einem Zeitpunkt nahe an und vor dem Scheitelwert der zu dem Trennschalter geführten Spannung verbunden wird.

5. Das Verfahren nach Anspruch 4, wobei der Zeitpunkt, zu dem die Spannungsversorgung zu den Zügen und den Transformatoren verbunden wird, innerhalb eines Intervalls von 1-4 ms vor dem Scheitelwert der zu dem Trennschalter geführten Spannung liegt.

6. Das Verfahren nach Anspruch 4, wobei der Zeitpunkt vor dem Scheitelwert der Spannung basierend auf der Größe der berechneten magnetischen Resonanz bestimmt wird, sodass, je größer die Remanenz ist, desto länger die Zeit vor dem Scheitelwert der Spannung ist.

7. Eine Vorrichtung zur Verminderung von Einschaltströmen bei dem Beaufschlagen eines Transformators in einem mit einer Wechselspannung beaufschlagten Schienensystem, wobei das Schienensystem eine Zuleitung (1) zur Versorgung von Zügen mit Wechselspannung, mehrere Transformatoren (3) und einen Trennschalter (5), der dazu ausgelegt ist, die Spannungsversorgung zu den Zügen und den Transformatoren zu verbinden und zu trennen, umfasst, **dadurch gekennzeichnet, dass** die Vorrichtung umfasst:
eine erste Messeinrichtung (7) zum Messen der zu dem Trennschalter geführten Wechselspannung,
eine zweite Messeinrichtung (8) zum Messen der von dem Trennschalter gelieferten Wechselspannung,
Mittel (12) zum Detektieren, wann der Trennschalter die Spannungsversorgung zu den Zügen und den Transformatoren trennt,
Berechnungsmittel (14) zum Berechnen der magnetischen Remanenz in den Transformatoren nach dem Detektieren, dass die Spannungsversorgung getrennt wurde, basierend auf der von dem Trennschalter gelieferten, gemessenen Spannung, und um zu bestimmen, ob die berechnete magnetische Remanenz positiv oder negativ ist, und
Verbindungsmittel (16) zum Verbinden des Trennschalters nach dem Beaufschlagen des Schienensystems, wobei das Verbindungsmittel dazu ausgelegt ist, den Trennschalter zu einem Zeitpunkt bei oder nahe eines positiven Scheitelwertes der zu dem Trennschalter geführten Spannung zu verbinden, falls die magnetische Remanenz negativ ist, und den Trennschalter zu einem Zeitpunkt bei oder nahe eines negativen Scheitelwertes der zu dem Trennschalter geführten Spannung zu verbinden, falls die magnetische Remanenz positiv ist.

8. Die Vorrichtung nach Anspruch 7, wobei das Berechnungsmittel (14) dazu ausgelegt ist, die magnetische Remanenz in den Transformatoren als die Gesamtfläche unter der Spannungskurve der von dem Trennschalter gelieferten Spannung zu berechnen, gezählt ab dem letzten Spannungs-Scheitelwertes vor dem Zeitpunkt, zu dem die Spannungsversorgung getrennt wurde, bis die gelieferte Spannung Null oder nahe Null wird.

9. Die Vorrichtung nach Anspruch 8, wobei die magnetische Remanenz als positiv bestimmt wird, falls die berechnete Fläche unter der Spannungskurve positiv ist, und die magnetische Remanenz als negativ bestimmt wird, falls die berechnete Fläche unter der Spannungskurve negativ ist.

10. Die Vorrichtung nach einem der Ansprüche 7 bis 9, wobei das Verbindungsmittel (16) dazu ausgelegt ist, den Trennschalter zu einem Zeitpunkt vor dem Scheitelwert der zu dem Trennschalter geführten Spannung zu verbinden, und den Zeitpunkt vor dem Scheitelwert der Spannung basierend auf der Größe der berechneten magnetischen Remanenz zu bestimmen, sodass, je größer die magnetische Remanenz ist, desto länger die Zeit vor dem Scheitelwert der Spannung ist.

## Revendications

1. Procédé de réduction de courants d'appel en liaison avec l'alimentation en énergie de transformateurs dans un système de chemin de fer électrifié par une tension alternative, le système de chemin de fer comprenant un feeder (1) pour alimenter des trains en une tension alternative, une pluralité de transformateurs (3) et un interrupteur (5) configuré pour connecter et déconnecter l'alimentation en tension des trains et des transformateurs,
procédé dans lequel :
on mesure la tension alternative envoyée à l'interrupteur,
on mesure la tension alternative appliquée à l'interrupteur,
on détecte l'instant où l'interrupteur déconnecte l'alimentation en tension des trains et des transformateurs,
on calcule la rémanence magnétique dans les transformateurs sur la base de la tension mesurée fournie par l'interrupteur, on détermine si la rémanence magnétique calculée est positive ou négative et, après avoir alimenté en énergie le système de chemin de fer :
on connecte l'alimentation en tension à un point dans le temps sur ou près d'une crête positive de la tension appliquée à l'interrupteur si la rémanence magnétique est négative, et
on connecte l'alimentation en tension en un point dans le temps sur ou près d'une crête négative de la tension appliquée à l'interrupteur si la résonance magnétique est positive.

2. Procédé suivant la revendication 1, dans lequel on calcule la rémanence magnétique dans les transformateurs comme étant la surface totale de la tension fournie par l'interrupteur décomptée à partir de la dernière tension de crête avant le point dans le temps où l'alimentation en électricité était déconnectée jusqu'à ce que la tension fournie devienne égale à zéro ou devienne proche de zéro.

3. Procédé suivant la revendication 2, dans lequel on détermine la rémanence magnétique comme étant positive si la surface de tension calculée est positive et on détermine que la rémanence magnétique est négative si la surface de tension calculée est négative.

4. Procédé suivant l'une quelconque des revendications précédentes, dans lequel on connecte l'alimentation en tension des trains et des transformateurs à un point dans le temps proche et en avant de la crête de la tension appliquée à l'interrupteur.

5. Procédé suivant la revendication 4, dans lequel le point dans le temps où l'alimentation en tension des trains et des transformateurs est connecté est dans un intervalle de 1 à 4 ms en avant de la crête de la tension appliquée à l'interrupteur.

6. Procédé suivant la revendication 4, dans lequel on détermine le point dans le temps en avant de la crête de la tension sur la base de la valeur de la rémanence magnétique calculée de manière à ce que le temps en avant de la crête de la tension soit d'autant plus grand que la rémanence est plus grande.

7. Installation de réduction de courants d'appel en liaison avec l'alimentation en énergie de transformateurs dans un système de chemin de fer électrifié par une tension alternative, le système de chemin de fer comprenant un feeder (1) pour alimenter des trains en une tension alternative, une pluralité de transformateurs (3) et un interrupteur (5) configuré pour connecter et déconnecter l'alimentation en tension des trains et des transformateurs, **caractérisée en ce que** l'installation comprend :
un premier dispositif (7) de mesure de la tension alternative appliquée à l'interrupteur,
un deuxième dispositif (8) de mesure de la tension alternative fournie par l'interrupteur,
des moyens (12) de détection de l'instant où l'interrupteur déconnecte l'alimentation en tension des trains et des transformateurs,
un moyen (14) de calcul de la rémanence magnétique dans les transformateurs après détection que l'alimentation en tension a été déconnectée sur la base de la tension mesurée fournie par l'interrupteur et pour déterminer si la résistance magnétique est positive ou négative, et
des moyens (16) de connexion pour connecter l'interrupteur après alimentation en énergie du système de chemin de fer, les moyens de connexion étant configurés pour connecter l'interrupteur en un point dans le temps sur ou proche d'une crête positive de la tension appliquée à l'interrupteur si la rémanence magnétique est positive et pour connecter l'interrupteur en un point dans le temps sur ou proche d'une crête négative de la tension appliquée à l'interrupteur si la rémanence magnétique est positive.

8. Installation suivant la revendication 7, dans laquelle le moyen (14) de calcul est configuré pour calculer la rémanence magnétique dans les transformateurs sous la forme de la surface totale de la tension fournie par l'interrupteur décomptée à partir de la dernière tension de crête avant le point dans le temps où l'alimentation en électricité était déconnectée jusqu'à ce que la tension fournie devienne égale à zéro ou devienne proche de zéro.

9. Installation suivant la revendication 8, dans laquelle la rémanence magnétique est déterminée comme étant positive si la surface de tension calculée est positive et on détermine que la rémanence magnétique est négative si la surface de tension calculée est négative.

10. Installation suivant l'une quelconque des revendications 7 à 9, dans laquelle les moyens (16) de connexions sont configurés pour connecter l'interrupteur en un point dans le temps en avant de la crête de la tension appliquée à l'interrupteur et pour déterminer le point dans le temps en avant de la crête de la tension sur la base de la valeur de la rémanence magnétique calculée de manière à ce que le temps en avant de la crête de la tension soit d'autant plus grand que la rémanence est plus grande.
